# EUROPÄISCHE PATENTSCHRIFT

(11) **EP 4 321 592 B1**
(45) Veröffentlichungstag und Bekanntmachung des Hinweises auf die Patenterteilung: **04.11.2026**
(21) Anmeldenummer: 22189172.4
(22) Anmeldetag: 08.08.2022
(51) Int. Cl.: C09K 5/10, H01M 10/625, H01M 10/6567

(54) **EFFIZIENTE UND UMWELTFREUNDLICHE KÜHLMITTEL ZUR DIREKTEN KÜHLUNG ELEKTRISCHER AKKUMULATOREN**
EFFICIENT AND ENVIRONMENTALLY FRIENDLY COOLANT FOR DIRECT COOLING OF ELECTRIC ACCUMULATORS
LIQUIDE DE REFROIDISSEMENT EFFICACE ET RESPECTUEUX DE L'ENVIRONNEMENT DESTINÉ AU REFROIDISSEMENT DIRECT DES ACCUMULATEURS ÉLECTRIQUES

(43) Veröffentlichungstag der Anmeldung: 14.02.2024
(73) Patentinhaber: OXEA GmbH, 40789 Monheim am Rhein NRW (DE)
(72) Erfinder: Fischer, Claudia, 67069 Ludwigshafen (DE); Hinzmann, Alessa, 40599 Düsseldorf (DE); Kubitschke, Jens, 40237 Düsseldorf (DE)
(74) Vertreter: Michalski Hüttermann & Partner mbB

(56) Entgegenhaltungen:
- EP-A1- 2 520 637
- WO-A1-2014/116369
- JP-A- 2011 063 734
- US-A1- 2022 131 205

## Beschreibung

Die vorliegende Erfindung betrifft die Verwendung einer Zusammensetzung zu größer oder gleich 80 Gew.-% und kleiner oder gleich 100 Gew.-% bestehend aus Diestern des Butandiols mit aliphatischen C4-C10 Monocarbonsäuren zur direkten Temperierung elektrischer Akkumulatoren.

Die Möglichkeiten der modernen Mobilitätsgesellschaft basieren im hohen Maße auf dem Einsatz leistungsfähiger und sicherer Energiespeicher, welche die Grundlage einer langandauernden und fehlerfreien Funktionalität der gewählten Anwendungen bilden. So lassen sich beispielsweise neue Funktionalitäten von Smartphones und Tablets nur dann erfolgreich im Markt etablieren, in denen das Basisgerät in der Lage ist, diese über eine gewisse Mindestnutzungsdauer verlässlich bereitzustellen. Dieser grundlegende Zusammenhang gilt umso mehr für deutlich energieintensivere Anwendungszweige, wie beispielsweise die Elektromobilität, wobei hier die unterschiedlichen Fahrzeugtypen sich primär nur in den Fällen erfolgreich gegen die bestehenden Alternativen am Markt durchsetzen können, in denen praxistaugliche Reichweiten und Ladezeiten unter einer Vielzahl an Umweltbedingungen bereitgestellt werden können. Insbesondere die Entwicklung effizienter Alkali-Ionen-Energiespeicher hat in den letzten Jahren dazu beigetragen, dass die maximale Reichweite von Fahrzeugen im reinen E-Betrieb deutlich gesteigert werden konnte. Um nicht nur eine vergleichbare, sondern auch eine umweltfreundlichere Alternative zu den auf Verbrennungsmotoren basierenden Fortbewegungskonzepten zu bieten, ist aber noch ein deutlicher Entwicklungsschub nötig. Zur Verbesserung der Effizienz der E-Mobilität konzentrieren sich Forschung und Industrie im Wesentlichen auf die Erhöhung der Leistungsfähigkeit der Batterien als solche. Ein großes Potential besteht aber noch in der Optimierung der Integration der Energiespeicher in die Fahrzeugumgebungen. Hier kann beispielsweise eine Erhöhung der nutzbaren Energie und der Zykluszahl über die Bereitstellung kontrollierbarer und gleichbleibender Batterie-Temperaturen mittels einer aktiven Temperierung der Batterien beitragen. Zusätzlich ist es natürlich wünschenswert, wenn diese aktive Temperierung unter möglichst umweltfreundlichen Bedingungen stattfindet. Dies kann insbesondere bedeuten, dass die zur Temperierung verwendeten Mittel nicht nur effizient, sondern auch nicht toxisch, nicht umweltschädlich, biologisch abbaubar sind und ein geringes GWP ("global warming potential") aufweisen. Diese Summe an Anwendungs- und Umweltanforderungen wird im Bereich der direkten Kühl- oder Temperierflüssigkeiten für Batterien zurzeit in Summe noch nicht in einem ausreichenden Maße erfüllt.

Auch in der Patentliteratur finden sich einige Beispiele für den Einsatz von Kühlflüssigkeiten zur Kühlung elektrischer Anlagen.

So beschreibt beispielsweise die WO 2014 116 369 A1 flüssige Kühlmedien, die zur Immersionskühlung von elektronischen Hardwaregeräten verwendet werden. Solche flüssigen Kühlmedien haben einen Flammpunkt von mindestens 190°C, bestimmt nach ASTM D92, und eine Viskosität von 27 mm²/s (27 Centistokes ("cSt")) oder weniger bei 40°C, bestimmt nach ASTM D445. Solche flüssigen Kühlmedien können verwendet werden, um solche Vorrichtungen wie Computerserver, Server-Motherboards und Mikroprozessoren immersionsgekühlt zu halten.

Weiterhin offenbart die EP 2 520 637 A1 ein Grundöl zum Kühlen einer Vorrichtung, umfassend: 30 Massen-% oder mehr von mindestens einem Oleylester (Oleat und ein Oleylalkoholester) und einem Oleylether, wobei der Oleylester und der Oleylether jeweils 23 oder mehr einer Gesamtzahl einer endständigen Methylgruppe, einer Methylengruppe und einer Ethergruppe in einer Hauptkette aufweisen, der Oleylester und der Oleylether haben jeweils 1 oder weniger einer Gesamtzahl einer Methylverzweigung und einer Ethylverzweigung, und das Grundöl hat eine kinematische Viskosität im Bereich von 4 mm²/s bis 30 mm²/s.

Die JP 2011 063 734 A stellt eine Elektromotorölzusammensetzung mit ausgezeichneter elektrischer Isolierung, Kühlleistung und thermischer Oxidationsstabilität, einem hohen Zündpunkt vom Sicherheitsstandpunkt, Schmierfähigkeit und Startleistung bei niedriger Temperatur bereit, wobei die Zusammensetzung auch als Getriebeöl verwendbar ist und vorzugsweise eine ausgezeichnete biologische Abbaubarkeit aufweist. Die Elektromotorölzusammensetzung wird unter Verwendung eines Basisöls hergestellt, das eine oder mehrere Arten von Estern mit einer Hydroxylzahl von ≤ 50 mg KOH/g, einer Gesamtsäurezahl von ≤ 2 mg KOH/g und einem Zündpunkt von ≥150°C umfasst, unter Estern, synthetisiert aus Adipinsäure und/oder Sebacinsäure und einem 5-14C-Alkohol und/oder Estern, synthetisiert aus Neopentylglykol und/oder Trimethylolpropan und einer 5-14C-Carbonsäure, und Zugabe einer Aminverbindung und/oder Phenolverbindung zum Grundöl in einer Menge von 0,01-3,0 Gew.-%, bezogen auf die Gesamtzusammensetzung.

Weiterhin offenbart die US 2022 131 205 A1 die Verwendung eines Esters in einer kühlenden Zusammensetzung. Das Dokument betrifft die Verwendung einer Zusammensetzung zum Kühlen eines Antriebssystems eines Elektro- oder Hybridfahrzeugs, die mindestens einen Ester mit einer kinematischen Viskosität, gemessen bei -25 °C, kleiner oder gleich 200 mm²/s und einem Selbstentzündungspunkt größer oder gleich 350 °C umfasst. Das Dokument betrifft auch eine Zusammensetzung, die ein Antriebssystem, insbesondere die Batterie und/oder die Leistungselektronik eines Elektro- oder Hybridfahrzeugs, kühlen kann, wobei die Zusammensetzung (i) mindestens einen Ester mit einer kinematischen Viskosität, gemessen bei -25 °C, kleiner oder gleich 200 mm²/s und einem Selbstentzündungspunkt größer oder gleich 350 °C und (ii) mindestens ein Additiv umfasst, das aus Antioxidantien, Reibungsmodifikatoren, Detergenzien, Verschleißschutzadditiven, Hochdruckadditiven, Dispergiermitteln, Stockpunkterniedrigern, Entschäumern und Mischungen davon ausgewählt ist.

Derartige aus dem Stand der Technik bekannte Lösungen können noch weiteres Verbesserungspotential bieten, insbesondere hinsichtlich der physikalischen, biologischen und umweltrelevanten Eigenschaften der im direkten Kontakt mit Batterien stehenden Temperierflüssigkeiten.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung eine Zusammensetzung zur Verwendung in der Temperierung elektrischer Akkumulatoren wie beispielsweise von Alkali-Ionen-Batterien bereitzustellen, welche sehr gute physikalische Eigenschaften wie beispielsweise geringe elektrische Leitfähigkeit, hohe Wärmekapazität, ausgezeichnete chemische Stabilität und niedrige Viskosität und zusätzlich sehr gute biologische Eigenschaften, wie beispielsweise eine schnelle biologische Abbaubarkeit, niedriges Wassergefährdungspotential, geringe oder gar keine humane Toxizität und ein geringes GWP aufweist.

Die Lösung der Aufgabe erfolgt durch die Merkmale des unabhängigen Anspruchs, gerichtet auf die erfindungsgemäße Verwendung. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, solange sich aus dem Kontext nicht eindeutig das Gegenteil ergibt.

Erfindungsgemäß gelöst wird die Aufgabe durch die Verwendung einer Zusammensetzung zu größer oder gleich 80 Gew.-% und kleiner oder gleich 100 Gew.-% bestehend aus Diestern des Butandiols mit aliphatischen C4-C10 Monocarbonsäuren zur direkten Temperierung elektrischer Akkumulatoren.

Überraschenderweise hat sich gezeigt, dass Zusammensetzungen mit einem überwiegenden Anteil an Estern des Butandiols mit mittelkettigen Monocarbonsäuren sich sehr gut zur direkten Kühlung elektrischer Akkumulatoren, beispielsweise in Form von Alkali-Ionen-Batterien, eignen. Die Zusammensetzungen zeigen eine sehr gute chemische Kompatibilität zu den Einhausungen der Batterien oder den Batteriezellen selbst und weisen über einen weiten Temperaturbereich eine niedrige Viskosität auf, welches sich positiv auf einen möglichen Energiebedarf zur aktiven Umwälzung der Kühlflüssigkeit auswirkt. Die besonders günstigen Viskositätseigenschaften der Zusammensetzungen zeigen sich sowohl bei höheren als auch bei sehr tiefen Temperaturen, welches zusammen mit niedrigen Stockpunkten (Pour Points) insgesamt ein großes Temperatur-Einsatzfenster für die Flüssigkeiten ermöglicht. Die Zusammensetzungen zeichnen sich zusätzlich durch eine geeignet niedrige elektrische Leitfähigkeit und hohe Flammpunkte aus. Die Zusammensetzungen sind nicht toxisch und zeigen insbesondere im Vergleich zu anderen Kühlmedien, wie beispielsweise FCKW, ein mit 0 deutlich geringeres GWP. Die vorgeschlagenen Zusammensetzungen sind biologisch abbaubar, welches in Vergleich zu anderen Temperier- oder Kühlmitteln zu einer deutlich verbesserten Umweltbilanz in der Nutzung der erfindungsgemäßen Temperiermittel führt. Die erfindungsgemäßen Zusammensetzungen auf Basis einer kleinen Auswahl aliphatischer Diester des Butandiols sind zudem chemisch sehr stabil, welches eine lange Nutzungsdauer auch unter extremeren Anwendungsbedingungen gewährleistet. Weiterhin sind die Zusammensetzungen zu einem Großteil der üblicherweise verwendbaren Zusatzstoffe kompatibel, sodass weitere chemische und physikalische Eigenschaften der Ester über Zusatzstoffe gezielt modifizierbar sind. Diese Summe an positiven Eigenschaften der Zusammensetzungen in der erfindungsgemäßen Verwendung ist insbesondere überraschend, da in der Literatur zwar geeignete Substanzklassen mit einer sehr großen Anzahl möglicher Mitglieder vorgeschlagen, die konkret offenbarten Mitglieder dieser Substanzklassen aber nicht ein derart ausgewogenes Anwendungsprofil in der beanspruchten Verwendung zeigen. Insofern ist überraschend, dass in der unüberschaubaren Gruppe an vorgeschlagenen Verbindungen eine kleine Gruppe existiert, welche sich wirklich deutlich besser zur Temperierung und insbesondere zur Kühlung von Akkumulatoren, beispielsweise in Form von Alkali-Ionen-Batterien, eignet und ausgewogene chemische, physikalische und biologische Anwendungseigenschaften aufweist. Des Weiteren können die erfindungsgemäßen Temperiermittel dazu beitragen, dass neue auf Akkumulatoren basierende, elektrische Konzepte schneller und sicherer am Markt etabliert werden können.

Die erfindungsgemäße Zusammensetzung wird zur direkten Temperierung elektrischer Akkumulatoren verwendet. Die erfindungsgemäße Zusammensetzung steht im direkten Kontakt zum Batteriegehäuse oder zu den Batteriezellen selbst und leistet über den direkten Kontakt die Temperierung der Akkumulatoren oder Batterien. Akkumulatoren sind insbesondere elektrisch wiederaufladbare Energiespeicher und zeigen, theoretisch, reversible chemische Elektrodenvorgänge beim Be- und Entladen. Eine Temperierung der Batterie über eine weitere Temperatur-Austauschfläche, welche nicht im direkten thermischen Kontakt mit dem Batteriegehäuse oder den Batterien steht, ist demzufolge nicht erfindungsgemäß. Aufgrund der Tatsache, dass üblicherweise eine Erhitzung der Batterien im Betrieb erfolgt, übernimmt die Zusammensetzung im Wesentlichen die Aufgabe der Kühlung der Batterie oder des Batteriearrays unter Anwendungsbedingungen. Übliche Temperaturen im Betrieb können sich beispielsweise von +80°C bis zu -40°C erstrecken. Mit den erfindungsgemäßen Zusammensetzungen lassen sich unterschiedliche Batterietypen temperieren. Besonders günstig lassen sich Akkumulatoren temperieren, welche auf dem Prinzip der Ein- und Auslagerung von Alkali-Ionen oder Alkali-Metall oder Erdalkali-Ionen oder Erdalkali-Metall in die Anode oder Kathode beruhen. Diese Batterien zeigen bei der Nutzung von Alkali-Ionen als Energieträger bestimmte Anforderungen an das Temperiermedium bezüglich der üblicherweise abzutransportierenden Wärmemengen, welche durch die erfindungsgemäße Zusammensetzung voll erfüllt werden. Auch im Fall einer lokalen Überhitzung trägt die direkte Kühlung durch die erfindungsgemäßen Diester dazu bei, diese zu verlangsamen. Die Alkali-Ionen-Batterien können die verschiedensten konkreten Aufbauten, beispielsweise auch den Einsatz von Hochvoltelektroden, aufweisen. Durch die hohe elektrische Durchschlagssicherheit des Temperierfluids lassen sich im Falle eines Versagens der Batteriestrukturen auch hohe Spannungen sicher handhaben. Beispiele für Alkali-Ionen-Batterien sind Batterien, welche auf der Ein- und Auslagerung von Lithium-, Natrium-, Kalium- oder Rubidium-Ionen beruhen. Beispiele für Erdalkali-Ionen-Batterien sind Batterien, welche auf der Ein- und Auslagerung von Be-, Mg-, oder Ca-Ionen beruhen.

Die Zusammensetzung besteht zu größer oder gleich 80 Gew.-% und kleiner oder gleich 100 Gew.-% aus Diestern des Butandiols mit aliphatischen C4-C10 Monocarbonsäuren. Die Zusammensetzung besteht also zu einem Großteil oder auch vollständig aus chemischen Verbindungen, welche zur Gruppe der Ester gehören. Die Ester sind Verbindungen des Dialkohols Butandiol (C4O2H2), also einem zweiwertigen aliphatischen Alkohol, welcher in Form der unterschiedlichen Stereoisomere 1,2-Butandiol, 1,3-Butandiol, 1,4-Butandiol, 2,3-Butandiol oder Mischungen mindestens zweier Isomere aus dieser Liste vorliegen kann. Der zweiwertige Alkohol wird mit einer oder zwei Monocarbonsäuren unter Wasserabspaltung verestert, wobei die Monocarbonsäuren von 4 bis zu 10 C-Atome aufweisen. Die Ketten der Monocarbonsäuren sind aliphatische Ketten, ohne ungesättigte oder aromatische Anteile. Es bilden sich mindestens Mono- oder aber insbesondere auch voll (Di)-Ester, wobei eine vollständige Veresterung bevorzugt aber nicht für sämtliche eingesetzten Butandiole zwingend ist. Die positiven Eigenschaften der Verwendung der Butandiol-Ester ergibt sich zudem in einem besonders hohen Maße, in welchen die Zusammensetzungen zu einem großen Gewichtsanteil Di-Ester aufweisen. Deutlich geringere Ester-Konzentrationen können nachteilig sein, da in diesem Fall die positiven physikalischen und chemischen Eigenschaften der Zusammensetzung nicht mehr aufrechterhalten werden können. Geringe Mengen an Zusatzstoffen, wie beispielsweise Korrosionsinhibitoren, viskositätsverändernde Zusätze, Farbstoffe oder Antioxidantien können in dem angegebenen Bereich allerdings ohne weitreichende Veränderung der Eigenschaften zugesetzt werden. Bevorzugt kann die Zusammensetzung ebenfalls zu größer oder gleich 85 Gew.-% und kleiner oder gleich 100 Gew.-%, des Weiteren bevorzugt zu größer oder gleich 87,5 Gew.-% und kleiner oder gleich 100 Gew.-% und weiterhin zu größer oder gleich 90 Gew.-% und kleiner oder gleich 100 Gew.-% die erfindungsgemäßen Ester umfassen.

In einer bevorzugten Ausführungsform der Verwendung kann das Butandiol ein 1,3-Butandiol sein. In seinen chemischen und physikalischen Eigenschaften hat sich insbesondere das 1,3 Butandiol (1,3 BG) für die direkte Temperierung von Batterien als besonders geeignet herausgestellt. Im Gegensatz zu den anderen Stereoisomeren zeigen die Ester des 1,3 BGs besonders niedrige Stockpunkte, besonders hohe Flammpunkte und gute thermische Eigenschaften. Zudem ist das Viskositätsprofil der 1,3 BG-Ester besonders geeignet, da geringe absolute Viskositäten und ein nur kleiner Viskositätsanstieg als Funktion einer Temperaturerniedrigung erhalten werden. Insofern könnte eine aktive Umwälzung der Zusammensetzung aufgrund der geringen Viskosität auch bei tiefen Temperaturen mit einem geringen Energieaufwand erreicht werden.

Innerhalb einer weiter bevorzugten Ausgestaltung der Verwendung können die Monocarbonsäuren zu größer oder gleich 80 mol-% geradkettige Monocarbonsäuren sein. Zum Erhalt eines besonders günstigen Viskositätsprofils, hoher Flammpunkte und sehr niedriger Stockpunkte können insbesondere hohe Anteile an nicht verzweigten, d.h. geradkettigen Monocarbonsäuren zur Veresterung des Butandiols eingesetzt werden. Diese BG-Ester mit geradkettigen Monocarbonsäuren können insbesondere eine im Vergleich zu Estern aus verzweigten aliphatischen Monocarbonsäuren oder Estern anderer Diole niedrigere Viskositäten aufweisen. Dieser Umstand macht sich energetisch besonders vorteilhaft im Falle einer erzwungenen Konvektion des Temperiermittels über Pumpen bemerkbar.

Innerhalb eines weiter bevorzugten Aspektes der Verwendung können die Monocarbonsäuren zu größer oder gleich 80 mol-% eine ungerade C-Anzahl aufweisen. Für den Erhalt hoher Flammpunkte und sehr niedriger Stockpunkte können insbesondere hohe Anteile an Monocarbonsäuren mit einer ungeraden C-Anzahl zur Veresterung mit dem Butandiol eingesetzt werden. Diese BG-Ester aus Monocarbonsäuren mit ungerader C-Anzahl können im Vergleich zu Estern aus Monocarbonsäuren mit gerader C-Anzahl physikalische Eigenschaften aufweisen, welche die Zusammensetzungen auch bei extremen Anwendungsbedingungen sicher handhabbar machen.

Nach einer bevorzugten Charakteristik der Verwendung können die Monocarbonsäuren aus der Gruppe bestehend aus C5- bis C9-Monocarbonsäuren ausgesucht sein. Insbesondere der mittlere Bereich an C-Kettenlängen der Monocarbonsäuren kann für eine Veresterung mit Butandiol zu besonders günstigen physikalischen und chemischen Eigenschaften führen. Die Zusammensetzungen sind chemisch sehr stabil und diese zeigen bei sehr niedrigen und sehr hohen Temperaturen ein geeignetes Viskositätsprofil. Die Zusammensetzungen weisen weiterhin sehr niedrige Stockpunkte und bei einem hinreichenden Veresterungsgrad eine sehr geringe elektrische Leitfähigkeit auf. Bevorzugt kann die Gruppe der Monocarbonsäuren auch aus C5- bis C8-Monocarbonsäuren oder aber C5- bis C7-Monocarbonsäuren ausgesucht sein. Innerhalb dieser Gruppen ergeben sich sehr gute und homogene physikalische und elektrische Eigenschaften.

In einer weiter bevorzugten Ausführungsform der Verwendung können die Monocarbonsäuren aus der Gruppe bestehend aus geradkettigen C5 oder C7 Monocarbonsäuren oder Mischungen dieser ausgesucht sein. Diese Ester des BGs mit einer ungeraden C-Anzahl und einem mittleren C-Kettenbereich zeigen besonders niedrige Viskositäten, auch in einem sehr niedrigen Temperaturbereich. Diese Verbindungen sind biologisch abbaubar und nicht human-toxisch.

Innerhalb eines bevorzugten Aspektes der Verwendung kann die Zusammensetzung zu größer oder gleich 95 Gew.-% und kleiner oder gleich 100 Gew.-% aus Diestern bestehen. Ein hoher Veresterungsgrad der Zusammensetzungen kann insbesondere die elektrischen und physikalischen Eigenschaften für die erfindungsgemäße Verwendung verbessern. Mit hohen Veresterungsgraden lassen sich sehr niedrige Leitfähigkeiten und ein geeignetes Viskositätsprofil sicherstellen. Der Veresterungsgrad kann beispielsweise spektroskopisch oder bevorzugt chemisch über die Hydroxylzahl bestimmt werden.

In einer weiter bevorzugten Ausführungsform der Verwendung können die Monocarbonsäuren zu größer oder gleich 95 mol-% aus geradkettigen C7 Monocarbonsäuren bestehen. Insbesondere C7-Ester und weiterhin C7-Diester des Butandiols können zu besonders günstigen physikalischen, darunter sehr guten thermischen, und elektrischen Eigenschaften der Zusammensetzung führen. Dies gilt des Weiteren im hohen Maße für die Diester des 1,3-BGs. Die Zusammensetzungen sind unter Anwendungsbedingungen chemisch sehr stabil und zeigen eine gute biologische Abbaubarkeit. In Summe ergeben sich sehr umweltfreundliche Temperierflüssigkeiten, welche im Vergleich zu den bekannten Alternativen ein deutlich besseres und ausgeglicheneres Eigenschaftsprofil aufweisen.

In einer weiteren Ausgestaltung der Verwendung kann der Diester ein Diester des 1,3-Butandiols sein, wobei das 1,3-Butandiol zu größer oder gleich 95 mol-% mit geradkettigen C7-Monocarbonsäuren verestert ist. Die bevorzugten chemischen und physikalischen Eigenschaften der Zusammensetzung ergeben sich insbesondere in den Fällen, in denen in der Veresterung ein sehr hoher Veresterungsgrad erreicht wird. Dieser Zusammenhang ergibt sich insbesondere unter der Verwendung unverzweigter Monocarbonsäuren. Ein Diester kann ein Vollester des BGs, insbesondere des 1,3 BGs sein. Es ist aber auch möglich, dass der Veresterungsgrad für den Diester größer oder gleich 96 mol-%, weiterhin größer oder gleich 97,5 mol-% und weiterhin größer oder gleich 99 mol-% der veresterungsfähigen Alkoholgruppen betrifft. Der Veresterungsgrad kann über die dem Fachmann bekannten chemischen Verfahren bestimmt werden.

In einer bevorzugten Ausführungsform der Verwendung können die Monocarbonsäuren zu größer oder gleich 95 mol-% aus geradkettigen C5 Monocarbonsäuren bestehen. Gerade die C5 Monocarbonsäuren als Esterkomponente können zu Diester-Zusammensetzungen führen, welche ein besonders günstiges Viskositätsprofil mit einem sehr kleinen Viskositätsindex, niedrigen Stockpunkten und hohen Flammpunkten zeigen.

Innerhalb einer weiter bevorzugten Ausgestaltung der Verwendung kann der Diester ein Diester des 1,3-Butandiols sein, wobei das 1,3-Butandiol zu größer oder gleich 95 mol-% mit geradkettigen C5-Monocarbonsäuren verestert ist. Gerade die Monocarbonsäuren mit einer gesamt C-Anzahl im mittleren C-Bereich zeigen ein sehr ausgewogenes Viskositätsprofil mit niedrigen Stockpunkten. Die Zusammensetzungen dieser Di-Ester zeigen thermische Eigenschaften und eine gute chemische Beständigkeit auch unter sehr tiefen und hohen Temperaturen.

Innerhalb eines weiter bevorzugten Aspektes der Verwendung kann der Gehalt an Diestern bezogen auf die molare Menge an Alkohol, ermittelt über GC, größer oder gleich 95 mol-% und kleiner oder gleich 100 mol-% betragen. Gerade sehr hohe Gehalte an Diestern des BGs können zu besonders geeigneten physikalischen und chemischen Eigenschaften zur Verwendung in der direkten Kühlung von beispielsweise Li-lonen-Akkus beitragen. Es können hinreichende Wärmemengen zur Kühlung oder zur Erwärmung über Konvektion oder über eine aktive Umwälzung der Temperierflüssigkeit mit geringen Energieaufwand erreicht werden. Dies kann die Energiebilanz des Betriebs der Akkumulatoren, die elektrische Leistungsfähigkeit und die Zykluszahl unter gleichbleibender elektrischer Leistung verbessern oder erhöhen.

Nach einer bevorzugten Charakteristik der Verwendung kann der Gehalt an Monoestern bezogen auf die molare Menge an Alkohol, ermittelt über GC, größer oder gleich 0 mol-% und kleiner oder gleich 2,5 mol-% betragen. Ein geringer Anteil an Monoestern in den Zusammensetzungen kann dazu beitragen, dass die elektrischen Eigenschaften der Zusammensetzungen, beispielsweise in Bezug auf die elektrische Leitfähigkeit der Zusammensetzungen, verbessert werden. Es können sich Zusammensetzungen ergeben, welche eine äußerst geringe Leitfähigkeit aufweisen und insofern gegenüber den üblicherweise verwendeten Wasser/Glykol-Mischungen in Bezug auf die elektrische Betriebssicherheit deutlich überlegen sind. Der molare Gehalt an Monoestern ergibt sich in Bezug auf die Summe der vorliegenden Mono- und Diester.

Nach einer bevorzugten Charakteristik der Verwendung können die elektrischen Akkumulatoren Li-lonen-Akkumulatoren sein. Für das elektrische Anwendungsprofil von Li-Ionen-Batterien oder -Akkumulatoren haben sich die erfindungsgemäßen Zusammensetzungen zur Kühlung oder Temperierung als besonders geeignet herausgestellt. Die üblicherweise auftretenden Temperaturspitzen unter Leistungsabgabe und bei der Aufladung können verzögert und sicher kompensiert werden. In Summe kann dadurch die elektrische Leistungsfähigkeit des Gesamtsystems verbessert werden.

Innerhalb eines bevorzugten Aspektes der Verwendung können die Li-lonen-Akkumulatoren zum Antrieb von Fahrzeugen verwendet werden. Die erfindungsgemäßen Zusammensetzungen können insbesondere zu einer Verlängerung der elektrischen Leistungsfähigkeit von Li-ionen-Akkumulatoren beitragen, welche in Fahrzeugen betrieben werden. Auch unter wechselnden Umweltbedingungen und mit stark unterschiedlichen Last- und Ladeprofilen, kann die auftretende Abwärme sicher abgeführt werden. Dies gilt im hohen Maße für die Temperierung großer Batterie-Arrays, wobei durch die geringe elektrische Leitfähigkeit der erfindungsgemäßen Zusammensetzungen auch im Havarie-Fall ein deutlich verbessertes Sicherheitsprofil erreicht werden kann. Fahrzeuge im Sinne der Erfindung sind teils oder voll elektrisch angetriebene Fortbewegungsmittel, wie beispielsweise Flugzeuge, Fahrräder, Scooter, Motorräder, Autorikschas, Schienenfahrzeuge, PKW oder Fahrzeuge für den Gütertransport, den Bergbau oder die Land- oder Forstwirtschaft.

Innerhalb eines weiter bevorzugten Aspektes der Verwendung kann die Zusammensetzung gleichzeitig zur Kühlung von Akkumulatoren, beispielsweise in Form von Alkali-Ionen-Batterien und zur Schmierung beweglicher Teile innerhalb eines Fahrzeuges verwendet werden. Bedingt durch die besonders günstigen thermischen und Viskositätseigenschaften, können die erfindungsgemäßen Zusammensetzungen nicht nur zur Kühlung, sondern auch zur Schmierung beweglicher Teile eingesetzt werden.

### Beispiele

### I Herstellung der Ester für die erfindungsgemäße Verwendung

Die erfindungsgemäßen Ester werden durch eine Umsetzung der entsprechenden Monocarbonsäuren mit einem oder mehreren Stereoisomeren des Butandiols dargestellt. In der Umsetzung kann beispielsweise ein molares Verhältnis von Monocarbonsäuren zu Alkohol von größer oder gleich 2,5 zu 1 (Monocarbonsäure zu Dialkohol) gewählt werden. Die Umsetzungen werden in Gegenwart eines Wasserschleppmittels in Abwesenheit eines Katalysators in einem Druckbereich von 50 mbar bis zu Normaldruck durchgeführt. Die Reaktionszeiten richten sich nach dem gewünschten Veresterungsgrad und können beispielsweise größer oder gleich 5 h betragen.

### II Physikalische Eigenschaften der Ester im Vergleich zu nicht erfindungsgemäßen Estern

Prinzipiell können unterschiedliche Diole zur Veresterung mit Monocarbonsäuren genutzt werden. In der Literatur werden neben anderen Verbindungen auch Ester genannt, welche sich für die Verwendung als Kühl- oder Schmiermittel eignen sollen. In der folgenden Tabelle sind die Viskositäten als Funktion der Temperatur, die Stockpunkte und die Flammpunkte unterschiedlicher Diole aufgeführt, welche mit aliphatischen C5- bis C7-Monocarbonsäuren umgesetzt wurden:

| Diester | Viskosität in mm²/sec | | | Flammpunkt in °C (CC) | Stockpunkt in °C |
|---|---|---|---|---|---|
| | 20°C | 40°C | 100°C | | |
| TCD DM-di-nC5-Ester | 55,40 | 23,00 | 4,46 | - | -61 |
| NPG-di-nC5-Ester | 5,94 | 3,60 | 1,38 | 154 | -89 |
| 1,3-BG-di-nC5-Ester | 4,95 | 3,13 | 1,27 | 152 | -93 |
| TCD DM-di-nC7-Ester | 69,30 | 28,20 | 5,24 | 190 | -61 |
| NPG-di-nC7-Ester | 10,07 | 5,69 | 1,88 | 190 | -86 |
| 1,3-BG-di-nC7-Ester | 8,35 | 4,88 | 1,73 | 191 | -95 |
| TCD DM-di-nC9-Ester | 92,50 | 36,70 | 6,46 | 191 | -61 |
| NPG-di-nC9-Ester | 16,45 | 8,62 | 2,57 | 203 | -33 |
| 1,3-BG-di-nC9-Ester | 13,90 | 7,55 | 2,39 | 195 | -41 |

Tricyclodecandimethanol-Diester (TCD-DM) weisen zwar hohe Flammpunkte und eher mittlere Stockpunkte auf, dennoch liegt die Viskosität dieser Ester bei 20°C in einem ungünstig hohen Bereich oberhalb von 50 mm²/sec bei 20°C. Im Vergleich zu den Neopentylglykol-Diestern (NPG) und 1,3-BG-Estern liegen die Viskositäten der TCD-DM-Diester am höchsten. Neopentylglykol-Diester (NPG) zeigen im Vergleich zu den 1,3-BG-Diestern vergleichbare Flammpunkte, aber sowohl die Stockpunkte als auch die Viskositäten liegen bei den 1,3-BG-Diestern niedriger. Der Unterschied in den Viskositäten der NPG- und der 1,3-BG-Diester wird insbesondere im Temperaturbereich ≤ 0°C sichtbarer. In der folgenden Tabelle sind die Messwerte angegeben, welche zeigen, dass die Viskositäten der 1,3-BG-Diester im Tieftemperaturbereich viel niedriger als die der NPG-Diester liegen:

| Diester | Viskosität in mm²/sec | | | | Thermische Leitfähigkeit bei 20°C [W/(m*K)] | Wärmekapazität bei 20°C [J/(g*K)] ASTM E 1269 |
|---|---|---|---|---|---|---|
| | -40°C | -20°C | -10°C | 0°C | | |
| NPG-di-nC5-Ester | - | 30,0 | - | 11,5 | - | - |
| 1,3-BG-di-nC5-Ester | 63,5 | 21,2 | 13,4 | 9,0 | 0,141 | 1,95 |
| NPG-di-nC7-Ester | 302,0 | 66,0 | 39,0 | 23,0 | 0,12 | 1,897 |
| 1,3-BG-di-nC7-Ester | 209,0 | 44,8 | 26,4 | 17,1 | 0,144 | 2,02 |

Die Diester des 1,3 BGs zeichnen sich im Vergleich zu anderen Estern durch ausreichende Flammpunkte, tiefe Stockpunkte und sehr geringe, vorteilhafte Viskositäten aus. Zusätzlich sind die thermischen Eigenschaften, wie beispielsweise thermische Leitfähigkeiten ermittelt nach ASTM D 7896, als sehr gut zu bezeichnen. Aus diesem Grund eignen sich die 1,3 BG-Diester im Vergleich zu anderen Estern in ganz besonderen Maße zur Verwendung als Temperier- oder Kühlmittel zur direkten Kühlung elektrischer Akkumulatoren wie beispielsweise Alkali-Ionen-Batterien.

### III Elektrische Eigenschaften und Umweltaspekte erfindungsgemäßer Ester

Die elektrische Leitfähigkeit von Vollestern des BGs mit den erfindungsgemäß einsetzbaren Monocarbonsäuren liegt üblicherweise im Bereich von kleiner als 10 nS/m, ermittelt nach CEI 60247. Das GWP-Potential der Verbindungen liegt im Bereich von 0. Die Verbindungen sind biologisch abbaubar. So kann beispielsweise die Abbaubarkeit, bestimmt nach Sturm, CO₂ release, OECD 301B, größer 60% in 28 Tagen betragen. Dies ergibt eine Einstufung als leicht biologisch abbaubar. Die Verbindungen sind nicht humantoxisch

### IV Physikalische Eigenschaften erfindungsgemäßer Ester

Für die unterschiedlichen 1,3 BG-Ester als Funktion der Monocarbonsäure-C-Kettenlänge ergeben sich folgende Daten:

| 1,3-BG-Diester | Viskosität (mm²/sec) | | | | Flammpunkt (°C) CC | Stockpunkt (°C) | Therm. Leitfähigkeit bei 20°C [W/(m*K)] | Wärmekapazität bei 20°C [J/(g*K)] ASTM E 1269 |
|---|---|---|---|---|---|---|---|---|
| | -40°C | 20°C | 40°C | 100°C | | | | |
| nC2 | | 3,21 | 2,01 | 0,827 | 97 | -79 | | |
| nC3 | | 2,94 | 1,93 | 0,85 | 110 | -83 | | |
| nC4 | | 4,02 | 2,59 | 1,09 | 132 | -95 | | |
| nC5 | 63,5 | 4,95 | 3,13 | 1,27 | 152 | -93 | 0,141 | 1,95 |
| nC7 | 209 | 8,35 | 4,88 | 1,73 | 191 | -95 | 0,144 | 2,02 |
| nC8/C10 | | 13,9 | 7,53 | 2,4 | 205 | -49 | | |
| nC9 | | 13,9 | 7,55 | 2,39 | 195 | -41 | | |
| nC12 | | 25,8 | 13 | 3,58 | 229 | -1 | | |

Zur sicheren Verwendung eines Temperier- oder Kühlmittels im direkten Kontakt mit Batteriezellen sollten die Zusammensetzungen einen hohen Flammpunkt, einen tiefen Stockpunkt und eine niedrige Viskosität aufweisen. Wie aus der Zusammenstellung der unterschiedlichen Diester als Funktion der C-Kettenlänge der eingesetzten Monocarbonsäuren ersichtlich ist, liefern Diester mit einer sehr kleinen C-Kettenlänge Zusammensetzungen mit einem zu geringen Flammpunkt im Bereich von 110°C. Diester aus Monocarbonsäuren mit einer sehr langen Kettenlänge liefern sehr hohe Flammpunkte, dennoch zeigen diese Diester nur unbefriedigende Stockpunkte und eine deutlich zu hohe Viskosität.

Insbesondere für Diester des 1,3 BGs mit Monocarbonsäuren, welche eine mittlere C-Kettenlänge aufweisen, ergeben sich sehr gute Eigenschaften für die direkte Kühlung elektrischer Akkumulatoren wie beispielsweise Alkali-Ionen-Batterien. Die Zusammensetzungen weisen eine sehr geringe Viskosität, bei doch beachtlich niedrigen Stockpunkten, hohen Flammpunkten und guten thermischen Eigenschaften auf. Somit sind diese Monocarbonsäuren mit einer C-Anzahl von C4 bis C10 und im besonders hohem Maße von C5 bis C7 zur effizienten Kühlung von beispielsweise Li-lonen-Batterien geeignet.

## Patentansprüche

1. Verwendung einer Zusammensetzung zu größer oder gleich 80 Gew.-% und kleiner oder gleich 100 Gew.-% bestehend aus Diestern des Butandiols mit aliphatischen C4-C10 Monocarbonsäuren zur direkten Temperierung elektrischer Akkumulatoren.

2. Verwendung nach Anspruch 1, wobei das Butandiol ein 1,3- Butandiol ist.

3. Verwendung nach einem der vorhergehenden Ansprüche, wobei die Monocarbonsäuren zu größer oder gleich 80 mol-% geradkettige Monocarbonsäuren sind.

4. Verwendung nach einem der vorhergehenden Ansprüche, wobei die Monocarbonsäuren zu größer oder gleich 80 mol-% eine ungerade C-Anzahl aufweisen.

5. Verwendung nach einem der vorhergehenden Ansprüche, wobei die Monocarbonsäuren ausgesucht sind aus der Gruppe bestehend aus C5- bis C9-Monocarbonsäuren.

6. Verwendung nach einem der vorhergehenden Ansprüche, wobei die Monocarbonsäuren ausgesucht sind aus der Gruppe bestehend aus geradkettigen C5- oder C7-Monocarbonsäuren oder Mischungen dieser.

7. Verwendung nach einem der vorhergehenden Ansprüche, wobei die Zusammensetzung zu größer oder gleich 95 Gew.-% und kleiner oder gleich 100 Gew.-% aus Diestern besteht.

8. Verwendung nach einem der vorhergehenden Ansprüche, wobei die Monocarbonsäuren zu größer oder gleich 95 mol-% aus geradkettigen C7-Monocarbonsäuren bestehen.

9. Verwendung nach einem der vorhergehenden Ansprüche, wobei der Diester ein Diester des 1,3-Butandiols ist, wobei das 1,3-Butandiol zu größer oder gleich 95 mol-% mit geradkettigen C7-Monocarbonsäuren verestert ist.

10. Verwendung nach einem der Ansprüche 1-7, wobei die Monocarbonsäuren zu größer oder gleich 95 mol-% aus geradkettigen C5-Monocarbonsäuren bestehen.

11. Verwendung nach Anspruch 10, wobei der Diester ein Diester des 1,3-Butandiols ist, wobei das 1,3-Butandiol zu größer oder gleich 95 mol-% mit geradkettigen C5-Monocarbonsäuren verestert ist.

12. Verwendung nach einem der vorhergehende Ansprüche, wobei der Gehalt an Diestern bezogen auf die molare Menge an Alkohol, ermittelt über GC, größer oder gleich 95 mol-% und kleiner oder gleich 100 mol-% beträgt.

13. Verwendung nach einem der vorhergehende Ansprüche, wobei der Gehalt an Monoestern bezogen auf die molare Menge an Alkohol, ermittelt über GC, größer oder gleich 0 mol-% und kleiner oder gleich 2,5 mol-% beträgt.

14. Verwendung nach einem der vorhergehende Ansprüche, wobei die elektrischen Akkumulatoren Li-lonen-Akkumulatoren sind.

15. Verwendung nach Anspruch 14, wobei die Li-lonen-Akkumulatoren zum Antrieb von Fahrzeugen verwendet werden.

## Claims

1. Use of a composition consisting of greater than or equal to 80 wt.% and less than or equal to 100 wt.% of diesters of butanediol with aliphatic C4-C10 monocarboxylic acids for direct temperature control of electrical accumulators.

2. Use according to claim 1, wherein the butanediol is a 1,3-butanediol.

3. Use according to any one of the preceding claims, wherein greater than or equal to 80 mol% of the monocarboxylic acids are straight-chain monocarboxylic acids.

4. Use according to any one of the preceding claims, wherein greater than or equal to 80 mol% of the monocarboxylic acids have an uneven number of carbon atoms.

5. Use according to any one of the preceding claims, wherein the monocarboxylic acids are selected from the group consisting of C5 to C9 monocarboxylic acids.

6. Use according to any one of the preceding claims, wherein the monocarboxylic acids are selected from the group consisting of straight-chain C5 or C7 monocarboxylic acids or mixtures thereof.

7. Use according to any one of the preceding claims, wherein the composition consists of greater than or equal to 95 wt.% and less than or equal to 100 wt.% of diesters.

8. Use according to any one of the preceding claims, wherein the monocarboxylic acids consist of greater than or equal to 95 mol% of straight chain C7 monocarboxylic acids.

9. Use according to any one of the preceding claims, wherein the diester is a diester of 1,3-butanediol, wherein greater than or equal to 95 mol% of the 1,3-butanediol is esterified with straight-chain C7 monocarboxylic acids.

10. Use according to any one of claims 1-7, wherein greater than or equal to 95 mol% of the monocarboxylic acids consist of straight-chain C5 monocarboxylic acids.

11. Use according to claim 10, wherein the diester is a diester of 1,3-butanediol, wherein 95 mol% or more of the 1,3-butanediol is esterified with straight-chain C5 monocarboxylic acids.

12. Use according to any one of the preceding claims, wherein the content of diesters, based on the molar amount of alcohol, determined by GC, is greater than or equal to 95 mol% and less than or equal to 100 mol%.

13. Use according to any one of the preceding claims, wherein the content of monoesters, based on the molar amount of alcohol, determined by GC, is greater than or equal to 0 mol% and less than or equal to 2.5 mol%.

14. Use according to any one of the preceding claims, wherein the electric accumulators are Li-ion accumulators.

15. Use according to claim 14, wherein the Li-ion accumulators are used for powering vehicles.

## Revendications

1. Utilisation d'une composition constituée de 80 % en poids ou plus et de 100 % en poids ou moins de diesters de butanediol avec des acides monocarboxyliques aliphatiques en C4-C10 pour la régulation directe de la température d'accumulateurs électriques.

2. Utilisation selon la revendication 1, dans laquelle le butanediol est un 1,3-butanediol.

3. Utilisation selon l'une quelconque des revendications précédentes, dans laquelle 80 % en moles ou plus des acides monocarboxyliques sont des acides monocarboxyliques à chaîne linéaire.

4. Utilisation selon l'une quelconque des revendications précédentes, dans laquelle 80 % en moles ou plus des acides monocarboxyliques présentent un nombre impair d'atomes de carbone.

5. Utilisation selon l'une quelconque des revendications précédentes, dans laquelle les acides monocarboxyliques sont choisis dans le groupe constitué par les acides monocarboxyliques en C5 à C9.

6. Utilisation selon l'une quelconque des revendications précédentes, dans laquelle les acides monocarboxyliques sont choisis dans le groupe constitué par les acides monocarboxyliques en C5 ou C7 à chaîne linéaire ou leurs mélanges.

7. Utilisation selon l'une quelconque des revendications précédentes, dans laquelle la composition est constituée de 95 % en poids ou plus et de 100 % en poids ou moins de diesters.

8. Utilisation selon l'une quelconque des revendications précédentes, dans laquelle les acides monocarboxyliques sont constitués de 95 % en moles ou plus d'acides monocarboxyliques en C7 à chaîne linéaire.

9. Utilisation selon l'une quelconque des revendications précédentes, dans laquelle le diester est un diester de 1,3-butanediol, dans laquelle 95 % en moles ou plus du 1,3-butanediol sont estérifiés avec des acides monocarboxyliques en C7 à chaîne linéaire.

10. Utilisation selon l'une quelconque des revendications 1 à 7, dans laquelle 95 % en moles ou plus des acides monocarboxyliques sont constitués d'acides monocarboxyliques en C5 à chaîne linéaire.

11. Utilisation selon la revendication 10, dans laquelle le diester est un diester de 1,3-butanediol, dans laquelle 95 % en moles ou plus du 1,3-butanediol sont estérifiés avec des acides monocarboxyliques en C5 à chaîne linéaire.

12. Utilisation selon l'une quelconque des revendications précédentes, dans laquelle la teneur en diesters, par rapport à la quantité molaire d'alcool, déterminée par CPG, est supérieure ou égale à 95 % en moles et inférieure ou égale à 100 % en moles.

13. Utilisation selon l'une quelconque des revendications précédentes, dans laquelle la teneur en monoesters, par rapport à la quantité molaire d'alcool, déterminée par CPG, est supérieure ou égale à 0 % en moles et inférieure ou égale à 2,5 % en moles.

14. Utilisation selon l'une quelconque des revendications précédentes, dans laquelle les accumulateurs électriques sont des accumulateurs Li-ion.

15. Utilisation selon la revendication 14, dans laquelle les accumulateurs Li-ion sont utilisés pour alimenter des véhicules.
